# EUROPEAN PATENT SPECIFICATION

(11) **EP 3 051 755 B1**
(45) Date of publication and mention of the grant of the patent: **14.06.2023**
(21) Application number: 13898420.8
(22) Date of filing: 29.11.2013
(51) Int. Cl.: H04L 12/28, G06F 21/10, H04W 12/08, H04L 67/125, H04L 9/40

(54) **INSTALLATION PACKAGE AUTHORIZATION METHOD AND DEVICE**
AUTORISIERUNGSVERFAHREN UND VORRICHTUNG FÜR INSTALLATIONSPAKET
PROCÉDÉ ET DISPOSITIF D'AUTORISATION DE PROGICIEL D'INSTALLATION

(43) Date of publication of application: 03.08.2016
(73) Proprietor: Huawei Device Co., Ltd., Dongguan, Guangdong 523808 (CN)
(72) Inventor: WANG, Chan, Shenzhen Guangdong 518129 (CN); WU, Huangwei, Shenzhen Guangdong 518129 (CN)
(74) Representative: Pfenning, Meinig & Partner mbB
(86) International application number: PCT/CN2013/088192
(87) International publication number: WO 2015/077993

(56) References cited:
- WO-A1-2012/084724
- CN-A- 102 752 457
- CN-A- 102 761 856
- GB-A- 2 470 811
- US-A1- 2001 051 925

## Description

### TECHNICAL FIELD

The present invention relates to the communications field, and in particular, to an installation package authorization method and apparatus.

### BACKGROUND

With the development of smartphones, an increasing number of applications emerge on a mobile terminal. Generally, when a user needs an application, the user downloads the application from a mobile application store, and then installs the application on a mobile terminal of the user. Mobile application stores include Google Play, App Store, or another third-party application store, where theses mobile application stores include an extremely large number of applications. In addition, a user may also install an application shared by a friend. However, most application sharing in the prior art is based on a uniform resource locator (URL, Uniform Resource Locator), where in a practical application, the URL may be a link address. When receiving a URL of a shared application, if the user wants to install the application, the user needs to download the application according to the URL of the application.

In a practical application, the following scenario may exist: When some friends get together, if a paid application is installed on a mobile phone of one of the friends, and other friends also want to install the application, the friend that has installed the application may send an installation package file of the application to the other friends. However, these paid applications limit usage permission of a user, and even if the other friends obtain an installation package of the paid application, the other friends cannot install or use the application in a case in which they do not purchase the application.

In a practical application, for example, in an application scenario of the iOS platform, App Store is Apple's official application downloading store, and all iPhone software and games assemble there. A user can select and download software and a game only after logging in by using an Apple ID. If the user shares only a download link address with another user, the user that receives the sharing further needs to link to App Store by using a terminal for downloading, but an actual downloading speed of App Store is slow, and the downloading is traffic-consuming.

However, currently, on the iOS platform, if a user wants to share an application with a friend or present an application to a friend, it cannot be implemented that the friend successfully installs the application without downloading an installation package file of the application.
US 2001/0051925 A1 discusses a digital contents superdistribution and transmittance method through digital contents download services, including: accessing a server providing digital contents download services via a communication network to make payment for digital contents on the server, and receiving a download of the digital contents on which a security code is set; distributing the downloaded digital contents for which payment has been made to another user; executing the digital contents on the another user's computer, and accessing the server automatically via a communication network; and if the server is accessed and payment is made for the digital contents by the another user, offering a predetermined compensation to the user that has received the download.

### SUMMARY

The invention is set out in the appended set of claims; the further examples called embodiments in the description are illustrative examples, not embodiments claimed in the present application. Embodiments of the present invention provide an installation package authorization method, which enables a user to successfully use a paid application in a case in which the user does not need to download an installation package of the paid application from an application store.

According to a first aspect, an embodiment of the present invention provides an installation package authorization method, including:
acquiring, by a first terminal, an installation package of a target application and an identifier of the target application that are sent by a second terminal, where the target application is an application that has been installed on the second terminal, and the installation package of the target application is generated by the second terminal according to the application that has been installed;
generating, by the first terminal, an application authorization request according to the identifier of the target application, where the application authorization request includes the identifier of the target application and user identity information of the first terminal;
sending, by the first terminal, the application authorization request to an application server, where the application authorization request is used to enable the application server to generate authorization information of the target application according to the user identity information of the first terminal and return the authorization information of the target application; and
receiving, by the first terminal, the authorization information, which is sent by the application server, of the target application, where the authorization information is used to authorize the first terminal to use the target application.

In a first possible implementation manner of the first aspect, before the generating, by the first terminal, an application authorization request, the method further includes:
installing, by the first terminal, the target application by using the installation package of the target application; and
after the receiving, by the first terminal, the authorization information, which is sent by the application server, of the target application, the method further includes:
   updating, by the first terminal, permission configuration information of the target application by using the authorization information of the target application, where the permission configuration information is permission for the first terminal to use the target application.

In a second possible implementation manner of the first aspect, after the receiving, by the first terminal, the authorization information, which is sent by the application server, of the target application, the method further includes:
installing, by the first terminal, the target application by using the installation package of the target application, and configuring permission configuration information of the target application by using the authorization information of the target application, where the permission configuration information is permission for the first terminal to use the target application.

In a third possible implementation manner of the first aspect,
the application authorization request is specifically an application purchase request; and
the sending, by the first terminal, the application authorization request to an application server is specifically:
sending, by the first terminal, the application purchase request to the application server;
receiving, by the first terminal, a payment link provided by the application server; and
paying for, by the first terminal, the target application according to the payment link, so that the application server generates the authorization information of the target application, where the authorization information includes the user identity information of the first terminal.

In a fourth possible implementation manner of the first aspect, before the generating, by the first terminal, an application authorization request according to the identifier of the target application, the method includes:
acquiring, by the first terminal, a redemption code of the target application; and
correspondingly, the application authorization request is specifically an authorization verification request, where the authorization verification request further includes the redemption code of the target application.

With reference to the first aspect and any one of the first to the fourth possible implementation manners of the first aspect, in a fifth possible implementation manner of the first aspect, the application authorization request further includes:
indication information indicating that the installation package does not need to be downloaded.

According to a second aspect, an embodiment of the present invention provides an installation package authorization method, including:
acquiring, by a second terminal, user identity information of a first terminal that is sent by the first terminal;
generating, by the second terminal, an application authorization request, where the application authorization request includes an identifier of the target application and the user identity information of the first terminal, the target application is an application that has been installed on the second terminal, and an installation package of the target application is generated by the second terminal according to the application that has been installed;
sending, by the second terminal, the application authorization request to an application server, where the application authorization request is used to enable the application server to generate authorization information of the target application according to the user identity information of the first terminal and return the authorization information of the target application;
receiving, by the second terminal, the authorization information, which is sent by the application server, of the target application, where the authorization information is used to authorize the first terminal to use the target application; and
sending, by the second terminal to the first terminal, an installation package, whose authorization information has been updated, of the target application.

In a first possible implementation manner of the second aspect,
the application authorization request is specifically an application purchase request; and
the sending, by the second terminal, the application authorization request to an application server is specifically:
sending, by the second terminal, the application purchase request to the application server;
receiving, by the second terminal, a payment link provided by the application server; and
paying for, by the second terminal, the target application according to the payment link, so that the application server generates the authorization information of the target application, where the authorization information includes the user identity information of the first terminal.

In a second possible implementation manner of the second aspect, before the generating, by the second terminal, an application authorization request, the method includes:
acquiring, by the second terminal, a redemption code of the target application; and
correspondingly, the application authorization request is specifically an authorization verification request, where the authorization verification request further includes the redemption code of the target application.

With reference to the second aspect and any one of the first to the second possible implementation manners of the second aspect, in a third possible implementation manner of the second aspect, the application authorization request further includes:
indication information indicating that the installation package does not need to be downloaded.

According to a third aspect, an embodiment of the present invention provides an installation package authorization method, including:
receiving, by an application server, an application authorization request sent by a first terminal, where the application authorization request includes an identifier of a target application and user identity information of the first terminal, where the target application is an application that has been installed on the second terminal, and an installation package of the target application is generated by the second terminal according to the application that has been installed;
generating, by the application server, authorization information of the target application according to the identifier of the target application and the user identity information of the first terminal, where the authorization information is used to authorize the first terminal to use the target application; and
sending, by the application server, the authorization information to the first terminal.

In a first possible implementation manner of the third aspect,
the application authorization request is specifically an application purchase request; and
the generating, by the application server, authorization information of the target application according to the identifier of the target application and the user identity information of the first terminal is specifically:
receiving, by the application server, the application purchase request sent by the first terminal;
providing, by the application server, a payment link for the first terminal, so that the first terminal pays for the target application; and
receiving, by the application server, a payment success response message sent by the first terminal, and triggering, by the application server according to the response message, the step of generating authorization information of the target application according to the identifier of the target application and the user identity information of the first terminal.

In a second possible implementation manner of the third aspect,
the application authorization request is specifically an authorization verification request, where the authorization verification request further includes a redemption code of the target application; and
before the generating, by the application server, authorization information of the target application according to the identifier of the target application and the user identity information of the first terminal, the method includes:
verifying the redemption code of the target application, and if verification succeeds, triggering the step of generating authorization information of the target application according to the identifier of the target application and the user identity information of the first terminal.

With reference to the third aspect and any one of the first to the second possible implementation manners of the third aspect, in a third possible implementation manner of the third aspect, the application authorization request further includes:
indication information indicating that the installation package does not need to be downloaded.

According to a fourth aspect, an embodiment of the present invention provides an installation package authorization method, including:
receiving, by an application server, an application authorization request sent by a second terminal, where the application authorization request includes an identifier of a target application and user identity information of the first terminal, where the target application is an application that has been installed on the second terminal, and an installation package of the target application is generated by the second terminal according to the application that has been installed;
generating, by the application server, authorization information of the target application according to the identifier of the target application and the user identity information of the first terminal, where the authorization information is used to authorize the first terminal to use the target application; and
sending, by the application server, the authorization information to the second terminal.

In a first possible implementation manner of the fourth aspect,
the application authorization request is specifically an application purchase request; and
the generating, by the application server, authorization information of the target application according to the identifier of the target application and the user identity information of the first terminal is specifically:
receiving, by the application server, the application purchase request sent by the second terminal;
providing, by the application server, a payment link for the second terminal, so that the second terminal pays for the target application; and
receiving, by the application server, a payment success response message sent by the second terminal, and triggering, by the application server according to the response message, the step of generating authorization information of the target application according to the identifier of the target application and the user identity information of the first terminal.

In a second possible implementation manner of the fourth aspect, the application authorization request is specifically an authorization verification request, where the authorization verification request further includes a redemption code of the target application; and
before the generating, by the application server, authorization information of the target application according to the identifier of the target application and the user identity information of the first terminal, the method includes:
verifying the redemption code of the target application, and if verification succeeds, triggering the step of generating authorization information of the target application according to the identifier of the target application and the user identity information of the first terminal.

With reference to the fourth aspect or the first possible implementation manner of the fourth aspect, in a second possible implementation manner of the fourth aspect, the application authorization request further includes:
indication information indicating that the installation package does not need to be downloaded.

It can be learned from the foregoing technical solutions that the embodiments of the present invention have the following advantages:

In the embodiments of the present invention, after acquiring an installation package, which is sent by a second terminal, of a target application, a first terminal generates an application authorization request according to an identifier of the target application, and sends the application authorization request to an application server, so that the application server generates authorization information of the target application according to user identity information of the first terminal and returns the authorization information of the target application; and after receiving the authorization information, which is sent by the application server, of the target application, the first terminal updates usage permission for the target application according to the user identity information carried in the authorization information, so that the first terminal can successfully run the target application. In addition, because the first terminal has acquired the installation package of the target application from the second terminal, the application server can determine only payment of the first terminal, and does not need to provide a download procedure of the installation package, which makes it more convenient for the first terminal to install and use the target application.

### BRIEF DESCRIPTION OF DRAWINGS

To describe the technical solutions in the embodiments of the present invention or in the prior art more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of an installation package authorization method according to an embodiment of the present invention;
FIG. 2 is a schematic diagram of a signaling procedure of an installation package authorization method according to an embodiment of the present invention;
FIG. 3 is a schematic diagram of another signaling procedure of an installation package authorization method according to an embodiment of the present invention;
FIG. 4 is a schematic diagram of another signaling procedure of an installation package authorization method according to an embodiment of the present invention;
FIG. 5 is a schematic diagram of another signaling procedure of an installation package authorization method according to an embodiment of the present invention;
FIG. 6 is a schematic diagram of a logical structure of a terminal according to an embodiment of the present invention;
FIG. 7 is a schematic diagram of another logical structure of a terminal according to an embodiment of the present invention;
FIG. 8 is a schematic diagram of a logical structure of an application server according to an embodiment of the present invention;
FIG. 9 is a schematic diagram of another logical structure of an application server according to an embodiment of the present invention; and
FIG. 10 is a schematic structural diagram of a computer device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The embodiments of the present invention provide an installation package authorization method, which enables a user to successfully use a paid application in a case in which the user does not need to download an installation package of the paid application from an application store.

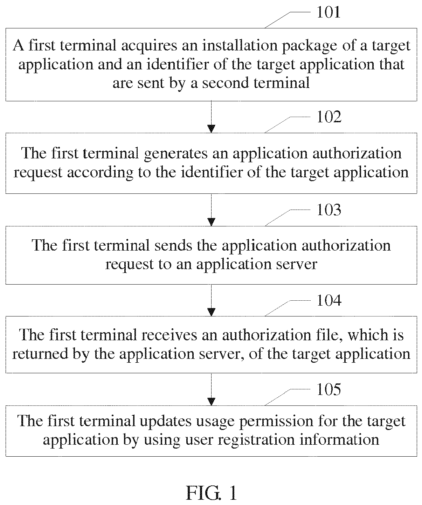

Referring to FIG. 1, an embodiment of an installation package authorization method according to an embodiment of the present invention includes the following steps:

101. A first terminal acquires an installation package of a target application and an identifier of the target application that are sent by a second terminal.

The first terminal acquires the installation package of the target application and the identifier of the target application that are sent by the second terminal. Specifically, the target application may be an application to be shared by the second terminal with the first terminal; optionally, the second terminal may send the installation package of the target application and the identifier of the target application to the first terminal by using a WiFi network; further, the second terminal may send the installation package of the target application and the identifier of the target application to the first terminal by using instant messaging software such as WeChat, Fetion, and QQ. In a practical application, in addition to the WiFi network, a communications mode such as Bluetooth and Near Field Communication (NFC, Near Field Communication) may also be used.

Specifically, the target application is an application that has been installed on the second terminal, and the installation package of the target application is generated by the second terminal according to the application that has been installed.

Specifically, the identifier of the target application may be a unique identifier of the target application.

On the iOS platform, a form of the unique identifier may be <key>itemId</key>; <integer>413616230</integer>.

On the Android platform, a form of the unique identifier may be com.company.app.

On the Windows Phone platform, a form of the unique identifier may be ProductID="{c7b 12de2-d55b-4d59-a431-815d6a987dc0}".

In this embodiment of the present invention, the first terminal is a terminal that receives sharing of the target application, and the second terminal is a terminal that shares the target application. It may be understood that "first" and "second" in this embodiment have no relationship of sequence, order, and importance, and are only used to distinguish between two terminals, that is, a terminal that offers sharing and a terminal that receives sharing. Therefore, description of "first" and "second" should not be construed as a limitation on practical construction or functions of the terminals in this embodiment of the present invention.

102. The first terminal generates an application authorization request according to the identifier of the target application.

The first terminal generates the application authorization request according to the identifier of the target application, where the application authorization request includes indication information indicating that the installation package does not need to be downloaded, the identifier of the target application, and user identity information of the first terminal.

The application authorization request may be one or more messages.

In this embodiment of the present invention, the first terminal has acquired the installation package of the target application from the second terminal; therefore, an application server does not need to provide downloading. The indication information indicating that the installation package does not need to be downloaded may be used to remind the application server that the application server does not need to provide a download service of the installation package.

The user identity information of the first terminal is used to generate, on the side of the application server, authorization information for enabling the first terminal to use the target application.

Specifically, the user identity information may be user account information or a device ID.

103. The first terminal sends the application authorization request to the application server.

The first terminal sends the application authorization request to the application server, where the application authorization request is used to enable the application server to generate the authorization information of the target application according to the user identity information of the first terminal and return the authorization information of the target application.

The authorization information includes the user identity information of the first terminal.

On the side of the application server, after it has been successfully determined that the first terminal has paid for the target application, the authorization information of the target application may be generated according to the user identity information of the first terminal, where the authorization information includes the user identity information of the first terminal (that is, bound to the user identity information of the first terminal). After the authorization information of the target application is generated, the application server returns the authorization information of the target application to the first terminal.

In a practical application, the application server may be an application store of a mobile terminal, for example, App Store.

104. The first terminal receives the authorization information, which is sent by the application server, of the target application.

The first terminal receives the authorization information, which is sent by the application server, of the target application, where the authorization information includes the user identity information, and the user identity information is registration information of the first terminal on the application server.

105. The first terminal updates usage permission for the target application by using the user identity information.

After obtaining the authorization information, the first terminal may update the usage permission for the target application by using the user identity information carried in the authorization information.

Optionally, a procedure for updating the usage permission may be updating installation permission for the target application, or may be updating running permission for the target application, and a specific updating manner may be determined according to an actual requirement, which is not specifically limited herein.

In a practical application, the installation package of the target application is sent by the second terminal; therefore, usage permission of the second terminal may have been configured for the installation package (that is, the installation package can be used only by the second terminal). In this case, after obtaining the authorization information from the application server, the first terminal may update the usage permission for the target application by using the authorization information, so that the first terminal can successfully use the target application.

In this embodiment of the present invention, an application is strictly managed and controlled on the iOS platform; therefore, it is more significant when the solution provided by this embodiment of the present invention is used on the iOS platform.

In this embodiment of the present invention, after acquiring an installation package, which is sent by a second terminal, of a target application, a first terminal generates an application authorization request according to an identifier of the target application, and sends the application authorization request to an application server, so that the application server generates authorization information of the target application according to user identity information of the first terminal and returns the authorization information of the target application; and after receiving the authorization information, which is sent by the application server, of the target application, the first terminal updates usage permission for the target application according to the user identity information carried in the authorization information, so that the first terminal can successfully run the target application. In addition, because the first terminal has acquired the installation package of the target application from the second terminal, the application server can determine only payment of the first terminal, and does not need to provide a download procedure of the installation package, which makes it more convenient for the first terminal to install and use the target application.

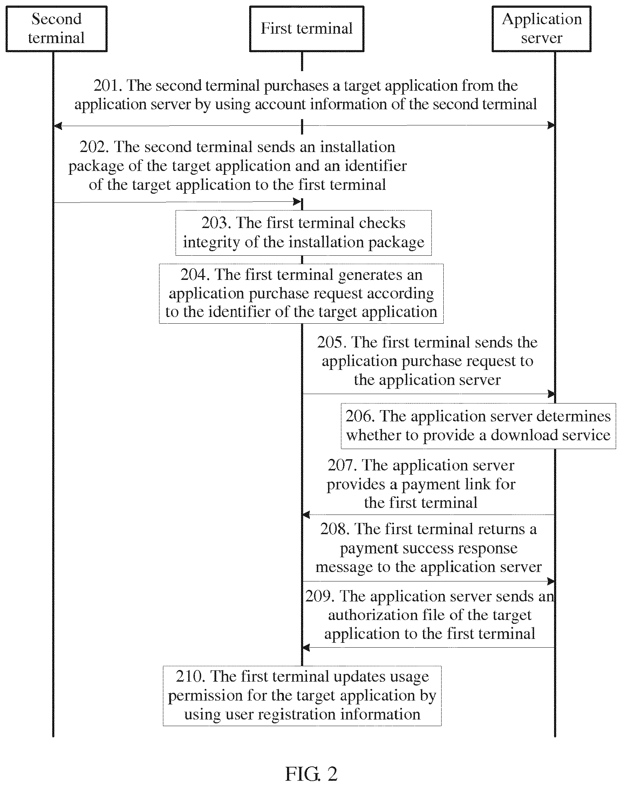

The following describes an embodiment of the present invention by using a scenario in which a first terminal purchases a target application from an application server. Referring to FIG. 2, another embodiment of an installation package authorization method according to an embodiment of the present invention includes the following steps:

201. A second terminal purchases a target application from an application server by using account information of the second terminal.

Specifically, after successfully purchasing the target application, the second terminal downloads an installation package of the target application from the application server, and locally installs the target application on the second terminal by using the installation package.

Specifically, the target application is an application that has been installed on the second terminal, and the installation package of the target application is generated by the second terminal according to the application that has been installed.

202. The second terminal sends the installation package of the target application and an identifier of the target application to a first terminal.

Specifically, the second terminal may send the installation package of the target application and the identifier of the target application to the first terminal by using a WiFi network; further, the second terminal may send the installation package of the target application and the identifier of the target application to the first terminal by using instant messaging software such as WeChat, Fetion, and QQ. In a practical application, in addition to the WiFi network, a communications mode such as Bluetooth and Near Field Communication (NFC, Near Field Communication) may also be used.

203. The first terminal checks integrity of the installation package.

After receiving the installation package of the target application and the identifier of the target application, the first terminal checks the integrity of the installation package, and if the check on the integrity succeeds (that is, the installation package is not tampered and can be validly used), continues to perform a purchase procedure.

204. The first terminal generates an application purchase request according to the identifier of the target application.

The first terminal generates the application purchase request according to the identifier of the target application, where the application purchase request includes indication information indicating that the installation package does not need to be downloaded, the identifier of the target application, and user identity information of the first terminal.

Specifically, the indication information indicating that the installation package does not need to be downloaded may be a download field set to "1". When the download field is set to "1", it indicates that the first terminal has downloaded the installation package of the target application, and does not need to download the installation package again from the application server; when the download field is set to "0", it indicates that the first terminal has not downloaded the installation package of the target application, and needs to download the installation package from the application server.

205. The first terminal sends the application purchase request to the application server.

The first terminal sends the application purchase request to the application server, where the application purchase request is used to purchase authorization information of the target application from the application server. The authorization information includes the user identity information of the first terminal.

206. The application server determines whether to provide a download service.

After receiving the application purchase request, the application server extracts a download field from the application purchase request; if the download field is set to "0", a procedure in the prior art is performed, and a download service is provided after purchase by a user; if the download field is set to "1", a procedure in this embodiment of the present invention is performed, authorization information is provided after purchase by a user, and a download service does not need to be provided.

207. The application server provides a payment link for the first terminal.

After determining that the download service does not need to be provided for the first terminal, the application server provides the payment link for the first terminal, so that a user performs a payment operation.

208. The first terminal returns a payment success response message to the application server.

The first terminal pays for the target application according to the payment link. After payment succeeds, the first terminal returns the payment success response message to the application server, so as to trigger the application server to generate the authorization information of the target application according to the user identity information of the first terminal return the authorization information of the target application.

209. The application server sends the authorization information of the target application to the first terminal.

After the payment success response message sent by the first terminal is received, it is determined that the first terminal has paid, and then the authorization information of the target application is generated according to the identifier of the target application and the user identity information of the first terminal, where the authorization information includes the user identity information, and the user identity information is registration information of the first terminal on the application server.

After generating the authorization information of the target application, the application server sends the authorization information of the target application to the first terminal.

210. The first terminal updates usage permission for the target application by using the user identity information.

After obtaining the authorization information, the first terminal updates authorization information of the installation package of the target application by using the user identity information, so that the first terminal obtains permission for successfully running the installation package.

Specifically, the first terminal may first delete authorization information of the second terminal from the installation package of the original target application, and then write the user identity information of the first terminal into the installation package, so as to generate authorization information of the first terminal; and after completing updating the authorization information, the first terminal can install the target application by using an updated installation package.

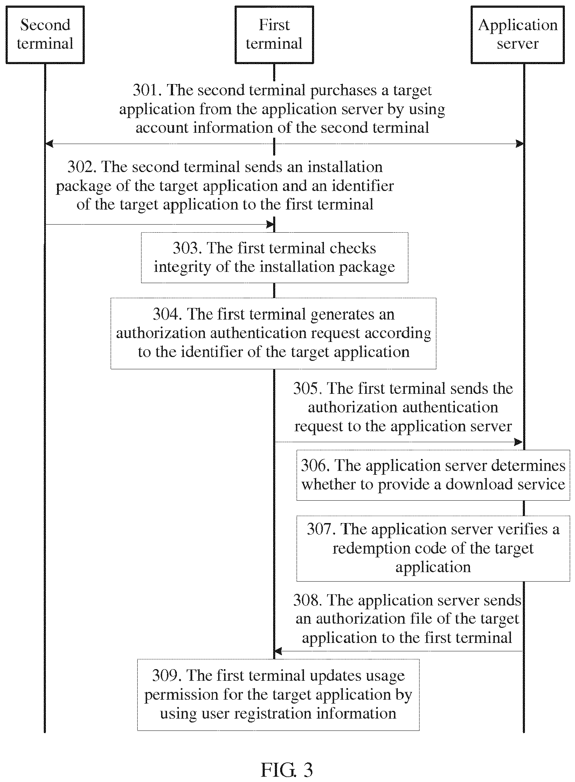

In a practical application, an application server side publishes some redemption codes, where these redemption codes may be presented by the application server side, or may be purchased by another user and are not used (which are equivalent to payment vouchers). After acquiring the redemption codes, a first terminal does not need to perform a purchase procedure. Referring to FIG. 3, another embodiment of an installation package authorization method according to an embodiment of the present invention includes the following steps:

301. A second terminal purchases a target application from an application server by using account information of the second terminal.

Specifically, after successfully purchasing the target application, the second terminal downloads an installation package of the target application from the application server, and locally installs the target application on the second terminal by using the installation package.

Specifically, the target application is an application that has been installed on the second terminal, and the installation package of the target application is generated by the second terminal according to the application that has been installed.

303. The second terminal sends the installation package of the target application and an identifier of the target application to a first terminal.

Specifically, the second terminal may send the installation package of the target application and the identifier of the target application to the first terminal by using a WiFi network; further, the second terminal may send the installation package of the target application and the identifier of the target application to the first terminal by using instant messaging software such as WeChat, Fetion, and QQ. In a practical application, in addition to the WiFi network, a communications mode such as Bluetooth and Near Field Communication (NFC, Near Field Communication) may also be used.

Optionally, if the second terminal additionally purchases a redemption code of the target application, the redemption code may also be sent to the first terminal by using the WiFi network. In a practical application, in addition to the WiFi network, a communications mode such as Bluetooth and Near Field Communication (NFC, Near Field Communication) may also be used.

303. The first terminal checks integrity of the installation package.

After receiving the installation package of the target application and the identifier of the target application, the first terminal checks the integrity of the installation package, and if the check on the integrity succeeds, extracts the identifier of the target application.

304. The first terminal generates an authorization authentication request according to the identifier of the target application.

The first terminal acquires the redemption code of the target application. Optionally, the redemption code may be sent by the second terminal, or may be acquired by the first terminal in another manner, which is not specifically limited herein.

The first terminal generates the authorization authentication request according to the identifier of the target application, where the authorization authentication request includes indication information indicating that the installation package does not need to be downloaded, the identifier of the target application, and user identity information of the first terminal. Further, the authorization authentication request further includes the redemption code of the target application.

Specifically, the indication information indicating that the installation package does not need to be downloaded may be a download field set to "1". When the download field is set to "1", it indicates that the first terminal has downloaded the installation package of the target application, and does not need to download the installation package again from the application server; when the download field is set to "0", it indicates that the first terminal has not downloaded the installation package of the target application, and needs to download the installation package from the application server.

305. The first terminal sends the authorization authentication request to the application server.

The first terminal sends the authorization authentication request to the application server, where the authorization authentication request is used to request the application server to verify the redemption code of the target application.

306. The application server determines whether to provide a download service.

After receiving the authorization authentication request, the application server extracts a download field from the authorization authentication request; if the download field is set to "0", a procedure in the prior art is performed, and a download service is provided after purchase by a user; if the download field is set to "1", a procedure in this embodiment of the present invention is performed, authorization information is provided after purchase by a user, and a download service does not need to be provided.

307. The application server verifies the redemption code of the target application.

The application server verifies the redemption code of the target application, and if the redemption code is valid, performs step 308.

308. The application server sends the authorization information of the target application to the first terminal.

After it is verified that the redemption code is valid, it is determined that the first terminal has paid, and then the authorization information of the target application is generated according to the identifier of the target application and the user identity information of the first terminal, where the authorization information includes the user identity information, and the user identity information is registration information of the first terminal on the application server.

After generating the authorization information of the target application, the application server sends the authorization information of the target application to the first terminal.

309. The first terminal updates usage permission for the target application by using the user identity information.

After obtaining the authorization information, the first terminal updates authorization information of the installation package of the target application by using the user identity information, so that the first terminal obtains permission for successfully running the installation package.

Specifically, the first terminal may first delete authorization information of the second terminal from the installation package of the original target application, and then write the user identity information of the first terminal into the installation package, so as to generate authorization information of the first terminal; and after completing updating the authorization information, the first terminal can install the target application by using an updated installation package.

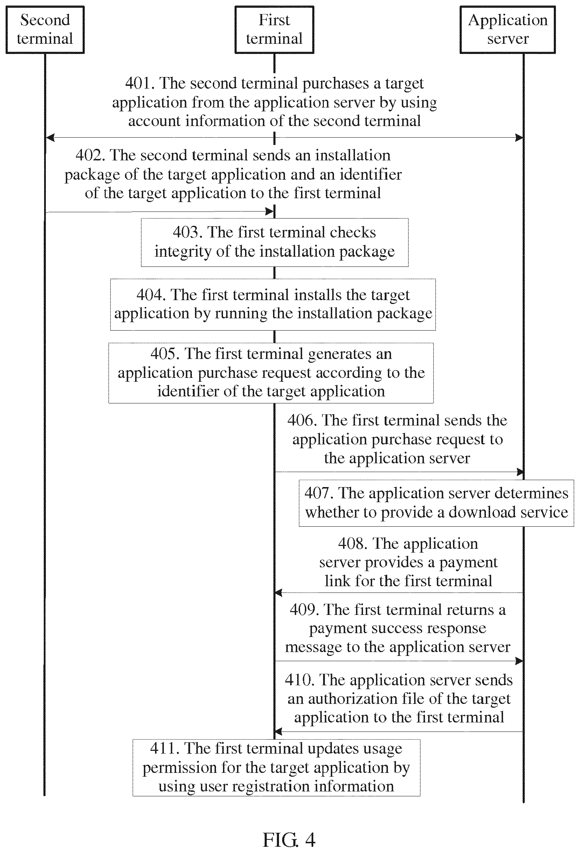

In a practical application, according to different manners for authenticating authorization information by an installation package, a user may first install a target application by running the installation package, and when the user needs to use the target application, the user performs authorization authentication on the target application. Referring to FIG. 4, another embodiment of an installation package authorization method according to an embodiment of the present invention includes the following steps:

401. A second terminal purchases a target application from an application server by using account information of the second terminal.

Specifically, after successfully purchasing the target application, the second terminal downloads an installation package of the target application from the application server, and locally installs the target application on the second terminal by using the installation package.

Specifically, the target application is an application that has been installed on the second terminal, and the installation package of the target application is generated by the second terminal according to the application that has been installed.

402. The second terminal sends the installation package of the target application and an identifier of the target application to a first terminal.

Specifically, the second terminal may send the installation package of the target application and the identifier of the target application to the first terminal by using a WiFi network; further, the second terminal may send the installation package of the target application and the identifier of the target application to the first terminal by using instant messaging software such as WeChat, Fetion, and QQ. In a practical application, in addition to the WiFi network, a communications mode such as Bluetooth and Near Field Communication (NFC, Near Field Communication) may also be used.

403. The first terminal checks integrity of the installation package.

After receiving the installation package of the target application and the identifier of the target application, the first terminal checks the integrity of the installation package, and if the check on the integrity succeeds, extracts the identifier of the target application.

404. The first terminal installs the target application by running the installation package.

The first terminal installs the target application by running the installation package, and after installation succeeds, receives a prompt that the target application needs to be authorized. After viewing the prompt that the target application needs to be authorized, a user may operate the first terminal, so as to trigger an authorization procedure of the target application. Specifically, as described in the foregoing embodiments in FIG. 2 and FIG. 3, the authorization procedure may be a purchase procedure, or may be a redemption code verification procedure. The purchase procedure is described in this embodiment of the present invention.

405. The first terminal generates an application purchase request according to the identifier of the target application.

After receiving an application purchasing indication from the user, the first terminal generates the application purchase request according to the identifier of the target application, where the application purchase request includes indication information indicating that the installation package does not need to be downloaded, the identifier of the target application, and user identity information of the first terminal.

Specifically, the indication information indicating that the installation package does not need to be downloaded may be a download field set to "1". When the download field is set to "1", it indicates that the first terminal has downloaded the installation package of the target application, and does not need to download the installation package again from the application server; when the download field is set to "0", it indicates that the first terminal has not downloaded the installation package of the target application, and needs to download the installation package from the application server.

406. The first terminal sends the application purchase request to the application server.

The first terminal sends the application purchase request to the application server, where the application purchase request is used to purchase authorization information of the target application from the application server.

407. The application server determines whether to provide a download service.

After receiving the application purchase request, the application server extracts a download field from the application purchase request; if the download field is set to "0", a procedure in the prior art is performed, and a download service is provided after purchase by a user; if the download field is set to "1", a procedure in this embodiment of the present invention is performed, authorization information is provided after purchase by a user, and a download service does not need to be provided.

408. The application server provides a payment link for the first terminal.

After determining that the download service does not need to be provided for the first terminal, the application server provides the payment link for the first terminal, so that the user performs a payment operation.

409. The first terminal returns a payment success response message to the application server.

The first terminal pays for the target application according to the payment link. After payment succeeds, the first terminal returns the payment success response message to the application server, so as to trigger the application server to generate the authorization information of the target application according to the user identity information of the first terminal and return the authorization information of the target application.

410. The application server sends the authorization information of the target application to the first terminal.

After the payment success response message sent by the first terminal is received, it is determined that the first terminal has paid, and then the authorization information of the target application is generated according to the identifier of the target application and the user identity information of the first terminal, where the authorization information includes the user identity information, and the user identity information is registration information of the first terminal on the application server.

After generating the authorization information of the target application, the application server sends the authorization information of the target application to the first terminal.

411. The first terminal updates usage permission for the target application by using the user identity information.

After obtaining the authorization information, the first terminal updates permission configuration information of the target application by using the user identity information, so that the first terminal can run the target application, where the permission configuration information is permission for a specific terminal to use the target application.

In a practical application, information related to the user is recorded in the permission configuration information of the target application, for example, a user account for purchasing, a device ID, an application ID, a vendor, a category, a purchase date, and a price; and a signature file of the user's purchase information in an application store such as App Store is included.

Specifically, after completing installation of the target application, the first terminal may first delete permission configuration information of the second terminal from the original target application, and then write the user identity information of the first terminal into the permission configuration information of the target application, so as to generate the authorization information for the first terminal; after completing updating the authorization information, the first terminal can run a program of the target application.

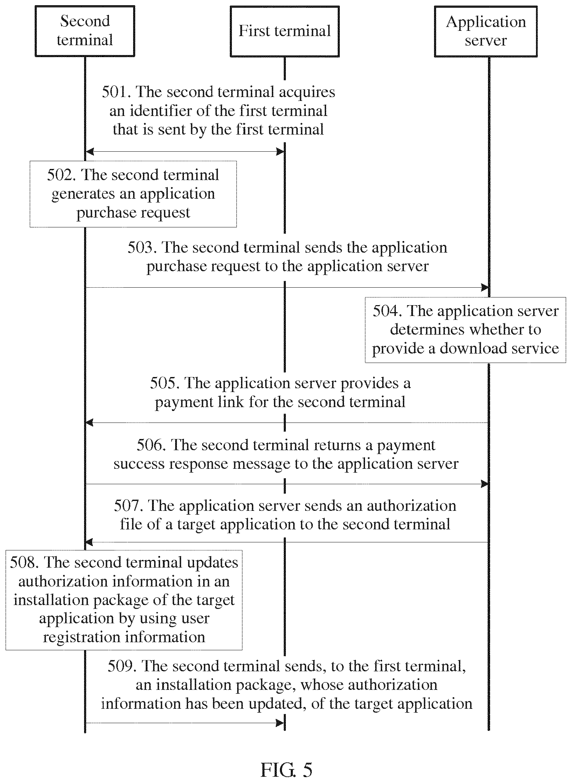

In a practical application, a second terminal may purchase a target application for a first terminal. Referring to FIG. 5, another embodiment of an installation package authorization method according to an embodiment of the present invention includes the following steps:

501. A second terminal acquires user identity information of a first terminal that is sent by the first terminal.

In this embodiment of the present invention, if the second terminal wants to purchase a target application for the first terminal, authentication and registration need to be performed, on an application server, by using the user identity information of the first terminal.

Specifically, the target application is an application that has been installed on the second terminal, and an installation package of the target application is generated by the second terminal according to the application that has been installed.

502. The second terminal generates an application purchase request.

The second terminal generates the application purchase request, where the application purchase request includes indication information indicating that the installation package does not need to be downloaded, an identifier of the target application, and the user identity information of the first terminal.

Specifically, the indication information indicating that the installation package does not need to be downloaded may be a download field set to "1". When the download field is set to "1", it indicates that the first terminal has downloaded the installation package of the target application, and does not need to download the installation package again from the application server; when the download field is set to "0", it indicates that the first terminal has not downloaded the installation package of the target application, and needs to download the installation package from the application server.

503. The second terminal sends the application purchase request to the application server.

The second terminal sends the application purchase request to the application server, where the application purchase request is used to purchase authorization information of the target application from the application server.

Optionally, as described in the foregoing embodiments in FIG. 2 and FIG. 3, an authorization procedure of the target application may be a purchase procedure, or may be a redemption code verification procedure. The purchase procedure described in this embodiment of the present invention.

504. The application server determines whether to provide a download service.

After receiving the application purchase request, the application server extracts a download field from the application purchase request; if the download field is set to "0", a procedure in the prior art is performed, and a download service is provided after purchase by a user; if the download field is set to "1", a procedure in this embodiment of the present invention is performed, authorization information is provided after purchase by a user, and a download service does not need to be provided.

505. The application server provides a payment link for the second terminal.

The application server provides the payment link for the second terminal, so that a user performs a payment operation.

506. The second terminal returns a payment success response message to the application server.

The second terminal pays for the target application according to the payment link. After payment succeeds, the second terminal returns the payment success response message to the application server, so as to trigger the application server to generate the authorization information of the target application according to the user identity information of the first terminal and return the authorization information of the target application.

507. The application server sends the authorization information of the target application to the second terminal.

After the payment success response message sent by the second terminal is received, it is determined that the second terminal has paid, and then the authorization information of the target application is generated according to the identifier of the target application and the user identity information of the first terminal, where the authorization information includes the user identity information, and the user identity information is registration information of the first terminal on the application server.

After generating the authorization information of the target application, the application server sends the authorization information of the target application to the second terminal.

508. The second terminal updates authorization information in the installation package of the target application by using the user identity information.

After obtaining the authorization information, the second terminal updates the authorization information of the installation package of the target application by using the user identity information, so that the first terminal obtains permission for successfully running the installation package.

509. The second terminal sends, to the first terminal, an installation package, whose authorization information has been updated, of the target application.

After the first terminal acquires the installation package, whose authorization information has been updated, of the target application, because the authorization information of the first terminal has been written into the installation package, the first terminal can normally install and use the target application.

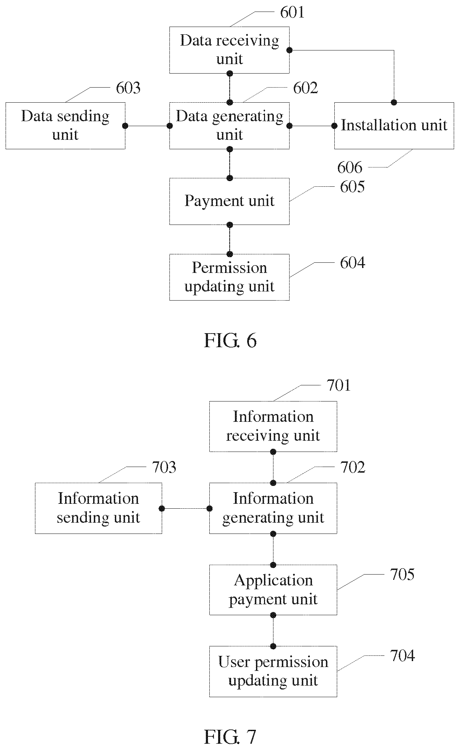

An embodiment of a terminal, which is configured to execute the foregoing installation package authorization method, according to the present invention is described in the following. Reference may be made to FIG. 6 for a logical structure of the terminal. The terminal in this embodiment of the present invention is used as a first terminal, where the first terminal can exchange data with a second terminal, and the terminal includes:
a data receiving unit 601, configured to acquire an installation package of a target application and an identifier of the target application that are sent by the second terminal, where the target application is an application that has been installed on the second terminal, and the installation package of the target application is generated by the second terminal according to the application that has been installed;
a data generating unit 602, configured to generate an application authorization request according to the identifier of the target application, where the application authorization request includes the identifier of the target application and user identity information of the first terminal; and
a data sending unit 603, to send the application authorization request to an application server, where the application authorization request is used to enable the application server to generate authorization information of the target application according to the user identity information of the first terminal and return the authorization information of the target application;
where the data receiving unit 601 is further configured to receive the authorization information, which is sent by the application server, of the target application, where the authorization information includes the user identity information of the first terminal, and the authorization information is used to authorize the first terminal to use the target application.

Optionally, the application authorization request further includes:
indication information indicating that the installation package does not need to be downloaded.

The authorization information includes the user identity information, and the user identity information is registration information of the first terminal on the application server.

Further, the terminal further includes:
an installation unit 606, configured to install the target application by using the installation package of the target application; and
a permission updating unit 604, configured to update permission configuration information of the target application by using the authorization information of the target application, where the permission configuration information is permission for the first terminal to use the target application.

The application authorization request is specifically an application purchase request;
the data receiving unit 601 is further configured to receive a payment link provided by the application server;
the data sending unit is further configured to send the application purchase request to the application server; and
the data receiving unit is further configured to receive the payment link provided by the application server.

Further, the terminal further includes:
a payment unit 605, configured to pay for the target application according to the payment link, so that the application server generates the authorization information of the target application, where the authorization information includes the user identity information of the first terminal.

The data receiving unit 601 is further configured to acquire a redemption code of the target application; and
correspondingly, the application authorization request is specifically an authorization verification request, where the authorization verification request further includes the redemption code of the target application.

The permission updating unit 604 is specifically configured to update authorization information of the installation package of the target application by using the user identity information, so that the first terminal obtains permission for successfully running the installation package.

An embodiment of a terminal, which is configured to execute the foregoing installation package authorization method, according to the present invention is described in the following. Reference may be made to FIG. 7 for a logical structure of the terminal. The terminal is used as a second terminal, where the second terminal can exchange data with a first terminal, and the terminal includes:
an information receiving unit 701, configured to acquire user identity information of the first terminal that is sent by the first terminal;
an information generating unit 702, configured to generate an application authorization request, where the application authorization request includes an identifier of the target application and the user identity information of the first terminal, the target application is an application that has been installed on the second terminal, and an installation package of the target application is generated by the second terminal according to the application that has been installed; and
an information sending unit 703, to send the application authorization request to an application server, where the application authorization request is used to enable the application server to generate authorization information of the target application according to the user identity information of the first terminal, where the authorization information includes the user identity information of the first terminal;
where the information receiving unit 701 is further configured to receive the authorization information, which is sent by the application server, of the target application, where the authorization information is used to authorize the first terminal to use the target application; and
the information sending unit 703 is further configured to send the installation package of the target application and the authorization information to the first terminal, so that the first terminal installs and uses the target application.

Optionally, the application authorization request further includes:
indication information indicating that the installation package does not need to be downloaded.

The authorization information includes the user identity information, and the user identity information is registration information of the first terminal on the application server.

Further, the terminal further includes:
a user permission updating unit 704, configured to update authorization information of the installation package in the target application by using the user identity information.

The application authorization request is specifically an application purchase request;
the information receiving unit 701 is further configured to receive a payment link provided by the application server;
the application authorization request is specifically an application purchase request;
the information sending unit is further configured to send the application purchase request to the application server; and
the information receiving unit is further configured to receive the payment link provided by the application server.

Further, the second terminal further includes:
an application payment unit 705, configured to pay for the target application according to the payment link, so that the application server generates the authorization information of the target application, where the authorization information includes the user identity information of the first terminal.

After payment succeeds, the information sending unit 703 is further configured to return a payment success response message to the application server, so as to trigger the application server to generate the authorization information of the target application according to the user identity information of the first terminal and return the authorization information of the target application.

The information receiving unit 701 is further configured to acquire a redemption code of the target application; and
correspondingly, the application authorization request is specifically an authorization verification request, where the authorization verification request further includes the redemption code of the target application.

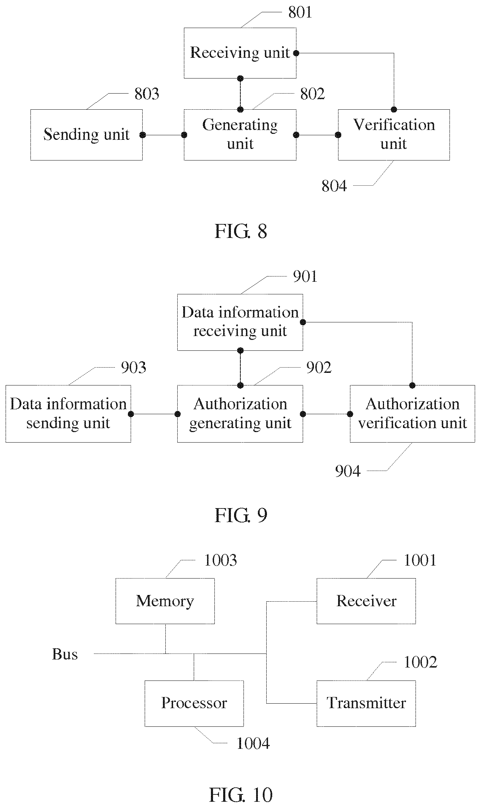

An embodiment of an application server, which is configured to execute the foregoing installation package authorization method, according to the present invention is described in the following. Reference may be made to FIG. 8 for a logical structure of the application server. An embodiment of the application server in this embodiment of the present invention includes:
a receiving unit 801, configured to receive an application authorization request sent by a first terminal, where the application authorization request includes an identifier of a target application and user identity information of the first terminal, where the target application is an application that has been installed on the second terminal, and an installation package of the target application is generated by the second terminal according to the application that has been installed, and is sent to the first terminal;
a generating unit 802, configured to generate authorization information of the target application according to the identifier of the target application and the user identity information of the first terminal, where the authorization information is used to authorize the first terminal to use the target application; and
a sending unit 803, configured to send the authorization information to the first terminal.

Optionally, the application authorization request further includes:
indication information indicating that the installation package does not need to be downloaded.

The authorization information includes the user identity information, and the user identity information is registration information of the first terminal on the application server.

The application authorization request is specifically an application purchase request;
the sending unit 803 is further configured to provide a payment link for the first terminal, so that the first terminal pays for the target application; and
the receiving unit 801 is further configured to receive a payment success response message sent by the first terminal, and trigger the generating unit.

The application authorization request is specifically an authorization verification request, where the authorization verification request further includes a redemption code of the target application.

Further, the application server further includes:
a verification unit 804, configured to verify the redemption code of the target application, and if verification succeeds, trigger the generating unit 802.

An embodiment of an application server, which is configured to execute the foregoing installation package authorization method, according to the present invention is described in the following. Reference may be made to FIG. 9 for a logical structure of the application server. An embodiment of the application server in this embodiment of the present invention includes:
a data information receiving unit 901, configured to receive an application authorization request sent by a second terminal, where the application authorization request includes an identifier of a target application and user identity information of the first terminal, where the target application is an application that has been installed on the second terminal, and an installation package of the target application is generated by the second terminal according to the application that has been installed;
an authorization generating unit 902, configured to generate authorization information of the target application according to the identifier of the target application and the user identity information of the first terminal, where the authorization information includes the user identity information of the first terminal, and the authorization information is used to authorize the first terminal to use the target application, and is sent to the first terminal; and
a data information sending unit 903, configured to send the authorization information to the second terminal.

Optionally, the application authorization request further includes:
indication information indicating that the installation package does not need to be downloaded.

The authorization information includes the user identity information, and the user identity information is registration information of the first terminal on the application server.

The application authorization request is specifically an application purchase request;
the data information sending unit 903 is further configured to provide a payment link for the first terminal, so that the first terminal pays for the target application; and
the data information receiving unit 901 is further configured to receive a payment success response message sent by the first terminal, where the application server triggers, according to the response message, the step of generating authorization information of the target application according to the identifier of the target application and the user identity information of the first terminal.

The application authorization request is specifically an authorization verification request, where the authorization verification request further includes a redemption code of the target application; and
further, the application server further includes:
an authorization verification unit 904, configured to verify the redemption code of the target application, and if verification succeeds, trigger the authorization generating unit 902.

For an operation process of each unit of the first terminal, the second terminal, and the application server in the embodiments of the present invention, reference may be made to the foregoing method embodiments, and details are not described herein.

An embodiment of the present invention further provides a computer storage medium. The computer storage medium may store a program. When the program is executed, all or a part of the steps of the information determining method recorded in the foregoing method embodiments are executed.

Referring to FIG. 10, an embodiment of the present invention further provides a terminal, where the terminal is used as a first terminal and may include:
a receiver 1001, a transmitter 1002, a memory 1003, and a processor 1004 (there may be one or more processors in the terminal, and one processor is used as an example in FIG. 10), where in some embodiments of the present invention, the receiver 1001, the transmitter 1002, the memory 1003, and the processor 1004 may be connected to each other by using a bus or in another manner, and that they are connected by using a bus is used as an example in FIG. 10.

The receiver 1001 is configured to acquire an installation package of a target application and an identifier of the target application that are sent by a second terminal, where the target application is an application that has been installed on the second terminal, and the installation package of the target application is generated by the second terminal according to the application that has been installed;
the memory 1003 is configured to store the installation package of the target application and the identifier of the target application;
the processor 1004 is configured to generate an application authorization request according to the identifier of the target application, where the application authorization request includes the identifier of the target application and user identity information of the first terminal;
the transmitter 1002 is to send the application authorization request to an application server, where the application authorization request is used to enable the application server to generate authorization information of the target application according to the user identity information of the first terminal and return the authorization information of the target application; and
the receiver 1001 is further configured to receive the authorization information, which is sent by the application server, of the target application, where the authorization information includes the user identity information of the first terminal, and the authorization information is used to authorize the first terminal to use the target application.

Optionally, the processor 1004 is further configured to install the target application by using the installation package of the target application, and update permission configuration information of the target application by using the authorization information of the target application, where the permission configuration information is permission for the first terminal to use the target application.

Further, the processor 1004 is further configured to install the target application by using the installation package of the target application, and configure the permission configuration information of the target application by using the authorization information of the target application, where the permission configuration information is permission for the first terminal to use the target application.

The transmitter 1002 is further configured to send the application purchase request to the application server; and
the receiver 1001 is further configured to receive a payment link provided by the application server.

Further, the processor 1004 is further configured to pay for the target application according to the payment link, so that the application server generates the authorization information of the target application, where the authorization information includes the user identity information of the first terminal.

The receiver 1001 is further configured to acquire a redemption code of the target application; and
correspondingly, the application authorization request is specifically an authorization verification request, where the authorization verification request further includes the redemption code of the target application.

The application authorization request further includes indication information indicating that the installation package does not need to be downloaded.

Referring to FIG. 10 again, an embodiment of the present invention further provides a terminal, where the terminal is used as a second terminal and may include:
a receiver 1001, a transmitter 1002, a memory 1003, and a processor 1004 (there may be one or more processors in the terminal, and one processor is used as an example in FIG. 10), where in some embodiments of the present invention, the receiver 1001, the transmitter 1002, the memory 1003, and the processor 1004 may be connected to each other by using a bus or in another manner, and that they are connected by using a bus is used as an example in FIG. 10.

The receiver 1001 is configured to acquire user identity information of a first terminal that is sent by the first terminal;
the memory 1003 is configured to the user identity information of the first terminal;
the processor 1004 is configured to generate an application authorization request, where the application authorization request includes an identifier of the target application and the user identity information of the first terminal, the target application is an application that has been installed on the second terminal, and an installation package of the target application is generated by the second terminal according to the application that has been installed;
the transmitter 1002 is to send the application authorization request to an application server, where the application authorization request is used to enable the application server to generate authorization information of the target application according to the user identity information of the first terminal, where the authorization information includes the user identity information of the first terminal;
the receiver 1001 is further configured to receive the authorization information, which is sent by the application server, of the target application, where the authorization information is used to authorize the first terminal to use the target application; and
the transmitter 1002 is further configured to send the installation package of the target application and the authorization information to the first terminal, so that the first terminal installs and uses the target application.

Optionally, the application authorization request is specifically an application purchase request;
the transmitter 1002 is further configured to send the application purchase request to the application server;
the receiver 1001 is further configured to receive a payment link provided by the application server; and
an application payment unit is configured to pay for the target application according to the payment link, so that the application server generates the authorization information of the target application, where the authorization information includes the user identity information of the first terminal.

The receiver 1001 is further configured to acquire a redemption code of the target application; and
correspondingly, the application authorization request is specifically an authorization verification request, where the authorization verification request further includes the redemption code of the target application.

The application authorization request further includes:
indication information indicating that the installation package does not need to be downloaded.

Referring to FIG. 10 again, an embodiment of the present invention further provides an application server, which may include:
a receiver 1001, a transmitter 1002, a memory 1003, and a processor 1004 (there may be one or more processors in the application server, and one processor is used as an example in FIG. 10), where in some embodiments of the present invention, the receiver 1001, the transmitter 1002, the memory 1003, and the processor 1004 may be connected to each other by using a bus or in another manner, and that they are connected by using a bus is used as an example in FIG. 10.

The receiver 1001 is configured to receive an application authorization request sent by a first terminal, where the application authorization request includes an identifier of a target application and user identity information of the first terminal, where the target application is an application that has been installed on a second terminal, and an installation package of the target application is generated by the second terminal according to the application that has been installed, and is sent to the first terminal;
the processor 1004 is configured to generate authorization information of the target application according to the identifier of the target application and the user identity information of the first terminal, where the authorization information is used to authorize the first terminal to use the target application;
the memory 1003 is configured to store the authorization information of the target application; and
the transmitter 1002 is configured to send the authorization information to the first terminal.

Optionally, the application authorization request is specifically an application purchase request;
the receiver 1001 is further configured to receive the application purchase request sent by the first terminal;
the transmitter 1002 is further configured to provide a payment link for the first terminal, so that the first terminal pays for the target application; and
the receiver 1001 is further configured to receive a payment success response message sent by the first terminal, where the application server triggers, according to the response message, the processor 1004 to perform a generating operation.

The application authorization request is specifically an authorization verification request, where the authorization verification request further includes a redemption code of the target application; and
the processor 1004 is further configured to verify the redemption code of the target application, and if verification succeeds, perform a generating operation.

Indication information indicating that the installation package does not need to be downloaded.

Referring to FIG. 10 again, an embodiment of the present invention further provides an application server, which may include:
a receiver 1001, a transmitter 1002, a memory 1003, and a processor 1004 (there may be one or more processors in the application server, and one processor is used as an example in FIG. 10), where in some embodiments of the present invention, the receiver 1001, the transmitter 1002, the memory 1003, and the processor 1004 may be connected to each other by using a bus or in another manner, and that they are connected by using a bus is used as an example in FIG. 10.

The receiver 1001 is configured to receive an application authorization request sent by a second terminal, where the application authorization request includes an identifier of a target application and user identity information of the first terminal, where the target application is an application that has been installed on the second terminal, and an installation package of the target application is generated by the second terminal according to the application that has been installed, and is sent to the first terminal;
the processor 1004 is configured to generate authorization information of the target application according to the identifier of the target application and the user identity information of the first terminal, where the authorization information is used to authorize the first terminal to use the target application;
the memory 1003 is configured to store the authorization information of the target application; and
the transmitter 1002 is configured to send the authorization information to the second terminal.

Optionally, the application authorization request is specifically an application purchase request;
the receiver 1001 is further configured to receive the application purchase request sent by the second terminal;
the transmitter 1002 is further configured to provide a payment link for the second terminal, so that the second terminal pays for the target application; and
the receiver 1001 is further configured to receive a payment success response message sent by the second terminal, where the application server triggers, according to the response message, the step of generating authorization information of the target application according to the identifier of the target application and the user identity information of the first terminal.

The application authorization request is specifically an authorization verification request, where the authorization verification request further includes a redemption code of the target application; and
the processor 1004 is further configured to verify the redemption code of the target application, and if verification succeeds, trigger the step of generating authorization information of the target application according to the identifier of the target application and the user identity information of the first terminal.

The application authorization request further includes:
indication information indicating that the installation package does not need to be downloaded.

For an operation process of each unit of the first terminal, the second terminal, and the application server in the embodiments of the present invention, reference may be made to the foregoing method embodiments, and details are not described herein.

In the several embodiments provided in the present application, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in a form of a software product. The computer software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An installation package authorization method, comprising performing steps of:
acquiring (302), by a first terminal, an installation package of a target application and an identifier of the target application that are sent by a second terminal by using a WiFi network, wherein the target application is an application that has been installed on the second terminal, and the installation package of the target application is downloaded from an application server by the second terminal;
checking (303), by the first terminal, the integrity of the installation package;
acquiring, by the first terminal, a redemption code of the target application sent by the second terminal by using the WiFi network, wherein the redemption code of the target application has been purchased by the second terminal;
generating (304), by the first terminal, an application authorization request, wherein the application authorization request is specifically an authorization verification request, wherein the application authorization request comprises the identifier of the target application, the redemption code of the target application and user identity information of the first terminal;
sending (305), by the first terminal, the application authorization request to the application server, wherein the application authorization request is used to request the application server to verify (307) the redemption code of the target application, wherein if it is verified by the application server that the redemption code is valid, it is determined that the first terminal has paid and the application server generates authorization information of the target application according to the identifier of the target application and the user identity information of the first terminal, wherein the authorization information comprises the user identity information of the first terminal; and
receiving (308), by the first terminal, the authorization information, which is sent by the application server, of the target application, wherein the authorization information is used to authorize the first terminal to use the target application.

2. The method according to claim 1, wherein:
before the generating, by the first terminal, an application authorization request, the method further comprises:
installing, by the first terminal, the target application by using the installation package of the target application; and
after the receiving, by the first terminal, the authorization information, which is sent by the application server, of the target application, the method further comprises:
updating (309), by the first terminal, permission configuration information of the target application by using the authorization information of the target application, wherein the permission configuration information is permission for the first terminal to use the target application.

3. The method according to claim 2, wherein after the receiving, by the first terminal, the authorization information, which is sent by the application server, of the target application, the method further comprises:
installing, by the first terminal, the target application by using the installation package of the target application, and configuring permission configuration information of the target application by using the authorization information of the target application, wherein the permission configuration information is permission for the first terminal to use the target application.

4. The method according to any of claims 1 to 3, wherein the application authorization request further comprises:
indication information indicating that the installation package does not need to be downloaded.

5. A system for installation package authorization, the system comprising a first terminal, a second terminal and an application server, wherein the first terminal comprises:
a data receiving unit (601), configured to perform a step of acquiring, from the second terminal by using a WiFi network, an installation package of a target application, an identifier of the target application and a redemption code of the target application, wherein the first terminal is configured to check the integrity of the installation package;
a data generating unit (602), configured to perform a step of generating an application authorization request according to the identifier of the target application, wherein the application authorization request comprises the identifier of the target application, the redemption code of the target application and user identity information of the first terminal; and
a data sending unit (603), configured to perform a step of sending the application authorization request to the application server, wherein the application authorization request is used to request the application server to verify the redemption code of the target application;
wherein the data receiving unit (601) is further configured to perform a step of receiving, from the application server, an authorization information of the target application,
wherein the second terminal is configured to:
purchase the target application from the application server by using account information of the second terminal;
purchase the redemption code of the target application;
download the installation package of the target application from the application server;
locally install the target application by using the installation package;
send the installation package of the target application and the identifier of the target application to the first terminal by using the WiFi network; and
send the redemption code of the target application to the first terminal by using the WiFi network; and
wherein the application server is configured to:
verify whether the redemption code is valid, wherein if it is verified by the application server that the redemption code is valid, it is determined that the first terminal has paid and the application server is further configured to generate the authorization information of the target application according to the identifier of the target application and the user identity information of the first terminal, wherein the authorization information comprises the user identity information of the first terminal, and the authorization information is used to authorize the first terminal to use the target application.

6. The system according to claim 5, wherein the first terminal further comprises:
an installation unit (606), configured to install the target application by using the installation package of the target application; and
a permission updating unit (604), configured to update permission configuration information of the target application by using the authorization information of the target application, wherein the permission configuration information is permission for the first terminal to use the target application.

7. The system according to claim 6, wherein the permission updating unit (604) is further configured to install the target application by using the installation package of the target application, and configure the permission configuration information of the target application by using the authorization information of the target application, wherein the permission configuration information is permission for the first terminal to use the target application.

8. The system according to any of claims 5 to 7, wherein the application authorization request further comprises:
indication information indicating that the installation package does not need to be downloaded.

## Patentansprüche

1. Installationspaketautorisierungsverfahren, umfassend ein Durchführen der Schritte:
Erfassen (302), durch ein erstes Endgerät, eines Installationspakets einer Zielanwendung und eines Bezeichners der Zielanwendung, die durch ein zweites Endgerät durch Verwenden eines WLAN-Netzwerks gesendet werden, wobei die Zielanwendung eine Anwendung ist, die auf dem zweiten Endgerät installiert wurde, und das Installationspaket der Zielanwendung durch das zweite Endgerät von einem Anwendungsserver heruntergeladen wird;
Überprüfen (303), durch das erste Endgerät, der Integrität des Installationspakets;
Erfassen, durch das erste Endgerät, eines Einlösecodes der Zielanwendung, der durch das zweite Endgerät durch Verwenden des WLAN-Netzwerks gesendet wird, wobei der Einlösecode der Zielanwendung durch das zweite Endgerät erworben wurde;
Erzeugen (304), durch das erste Endgerät, einer Anwendungsautorisierungsanforderung, wobei die Anwendungsautorisierungsanforderung spezifisch eine Autorisierungsverifizierungsanforderung ist, wobei die Anwendungsautorisierungsanforderung den Bezeichner der Zielanwendung, den Einlösecode der Zielanwendung und Benutzeridentitätsinformationen des ersten Endgeräts umfasst;
Senden (305), durch das erste Endgerät, der Anwendungsautorisierungsanforderung an den Anwendungsserver, wobei die Anwendungsautorisierungsanforderung verwendet wird, um anzufordern, dass der Anwendungsserver den Einlösecode der Zielanwendung verifiziert (307), wobei, falls durch den Anwendungsserver verifiziert wird, dass der Einlösecode gültig ist, bestimmt wird, dass das erste Endgerät bezahlt hat, und der Anwendungsserver Autorisierungsinformationen der Zielanwendung gemäß dem Bezeichner der Zielanwendung und den Benutzeridentitätsinformationen des ersten Endgeräts erzeugt, wobei die Autorisierungsinformationen die Benutzeridentitätsinformationen des ersten Endgeräts umfassen; und
Empfangen (308), durch das erste Endgerät, der Autorisierungsinformationen, die durch den Anwendungsserver gesendet werden, der Zielanwendung, wobei die Autorisierungsinformationen verwendet werden, um das erste Endgerät zu autorisieren, die Zielanwendung zu verwenden.

2. Verfahren nach Anspruch 1, wobei:
vor dem Erzeugen, durch das erste Endgerät, einer Anwendungsautorisierungsanforderung, das Verfahren ferner umfasst:
Installieren, durch das erste Endgerät, der Zielanwendung durch Verwenden des Installationspakets der Zielanwendung; und
nach dem Empfangen, durch das erste Endgerät, der Autorisierungsinformationen, die durch den Anwendungsserver gesendet werden, der Zielanwendung, das Verfahren ferner umfasst:
Aktualisieren (309), durch das erste Endgerät, von Berechtigungskonfigurationsinformationen der Zielanwendung durch Verwenden der Autorisierungsinformationen der Zielanwendung, wobei die Berechtigungskonfigurationsinformationen eine Berechtigung für das erste Endgerät sind, um die Zielanwendung zu verwenden.

3. Verfahren nach Anspruch 2, wobei nach dem Empfangen, durch das erste Endgerät, der Autorisierungsinformationen, die durch den Anwendungsserver gesendet werden, der Zielanwendung, das Verfahren ferner umfasst:
Installieren, durch das erste Endgerät, der Zielanwendung durch Verwenden des Installationspakets der Zielanwendung und Konfigurieren von Berechtigungskonfigurationsinformationen der Zielanwendung durch Verwenden der Autorisierungsinformationen der Zielanwendung, wobei die Berechtigungskonfigurationsinformationen die Berechtigung für das erste Endgerät sind, um die Zielanwendung zu verwenden.

4. Verfahren nach einem der Ansprüche 1 bis 3, wobei die Anwendungsautorisierungsanforderung ferner umfasst:
Anzeigeinformationen, die anzeigen, dass das Installationspaket nicht heruntergeladen werden muss.

5. System für eine Installationspaketautorisierung, das System umfassend ein erstes Endgerät, ein zweites Endgerät und einen Anwendungsserver, wobei das erste Endgerät umfasst:
eine Datenempfangseinheit (601), die konfiguriert ist, um einen Schritt des Erfassens, von dem zweiten Endgerät durch Verwenden eines WLAN-Netzwerks, eines Installationspakets einer Zielanwendung, eines Bezeichners der Zielanwendung und eines Einlösecodes der Zielanwendung durchzuführen, wobei das erste Endgerät konfiguriert ist, um die Integrität des Installationspakets zu überprüfen;
eine Datenerzeugungseinheit (602), die konfiguriert ist, um einen Schritt des Erzeugens einer Anwendungsautorisierungsanforderung gemäß dem Bezeichner der Zielanwendung durchzuführen, wobei die Anwendungsautorisierungsanforderung den Bezeichner der Zielanwendung, den Einlösecode der Zielanwendung und die Benutzeridentitätsinformationen des ersten Endgeräts umfasst; und
eine Datensendeeinheit (603), die konfiguriert ist, um einen Schritt des Sendens der Anwendungsautorisierungsanforderung an den Anwendungsserver durchzuführen, wobei die Anwendungsautorisierungsanforderung verwendet wird, um anzufordern, dass der Anwendungsserver den Einlösecode der Zielanwendung verifiziert;
wobei die Datenempfangseinheit (601) ferner konfiguriert ist, um einen Schritt des Empfangens, von dem Anwendungsserver, von Autorisierungsinformationen der Zielanwendung durchzuführen,
wobei das zweite Endgerät konfiguriert ist zum:
Erwerben der Zielanwendung von dem Anwendungsserver durch Verwenden von Kontoinformationen des zweiten Endgeräts;
Erwerben des Einlösecodes der Zielanwendung;
Herunterladen des Installationspakets der Zielanwendung von dem Anwendungsserver;
lokalen Installieren der Zielanwendung durch Verwenden des Installationspakets;
Senden des Installationspakets der Zielanwendung und des Bezeichners der Zielanwendung an das erste Endgerät durch Verwenden des WLAN-Netzwerks; und
Senden des Einlösecodes der Zielanwendung an das erste Endgerät durch Verwenden des WLAN-Netzwerks; und
wobei der Anwendungsserver konfiguriert ist zum:
Verifizieren, ob der Einlösecode gültig ist, wobei, wenn durch den Anwendungsserver verifiziert wird, dass der Einlösecode gültig ist, bestimmt wird, dass das erste Endgerät bezahlt hat, und der Anwendungsserver ferner konfiguriert ist, um die Autorisierungsinformationen der Zielanwendung gemäß des Bezeichners der Zielanwendung und den Benutzeridentitätsinformationen des ersten Endgeräts zu erzeugen, wobei die Autorisierungsinformationen die Benutzeridentitätsinformationen des ersten Endgeräts umfassen und die Autorisierungsinformationen verwendet werden, um das erste Endgerät zu autorisieren, die Zielanwendung zu verwenden.

6. System nach Anspruch 5, wobei das erste Endgerät ferner umfasst:
eine Installationseinheit (606), die konfiguriert ist, um die Zielanwendung durch Verwenden des Installationspakets der Zielanwendung zu installieren; und
eine Berechtigungsaktualisierungseinheit (604), die konfiguriert ist, um Berechtigungskonfigurationsinformationen der Zielanwendung durch Verwenden der Autorisierungsinformationen der Zielanwendung zu aktualisieren, wobei die Berechtigungskonfigurationsinformationen die Berechtigung für das erste Endgerät sind, die Zielanwendung zu verwenden.

7. System nach Anspruch 6, wobei die Berechtigungsaktualisierungseinheit (604) ferner konfiguriert ist, um die Zielanwendung durch Verwenden des Installationspakets der Zielanwendung zu installieren und die Berechtigungskonfigurationsinformationen der Zielanwendung durch Verwenden der Autorisierungsinformationen der Zielanwendung zu konfigurieren, wobei die Berechtigungskonfigurationsinformationen die Berechtigung für das erste Endgerät sind, um die Zielanwendung zu verwenden.

8. System nach einem der Ansprüche 5 bis 7, wobei die
Anwendungsautorisierungsanforderung ferner umfasst:
Anzeigeinformationen, die anzeigen, dass das Installationspaket nicht heruntergeladen werden muss.

## Revendications

1. Procédé d'autorisation de progiciel d'installation, comprenant la réalisation d'étapes consistant à :
acquérir (302), par un premier terminal, un progiciel d'installation d'une application cible et un identifiant de l'application cible qui sont envoyés par un second terminal à l'aide d'un réseau WiFi, dans lequel l'application cible est une application qui a été installée sur le second terminal, et le progiciel d'installation de l'application cible est téléchargé à partir d'un serveur d'applications par le second terminal ;
vérifier (303), par le premier terminal, l'intégrité du progiciel d'installation ;
acquérir, par le premier terminal, un code d'échange de l'application cible envoyé par le second terminal à l'aide du réseau WiFi, dans lequel le code d'échange de l'application cible a été acheté par le second terminal ;
générer (304), par le premier terminal, une demande d'autorisation d'application, dans lequel la demande d'autorisation d'application est spécifiquement une demande de vérification d'autorisation, dans lequel la demande d'autorisation d'application comprend l'identifiant de l'application cible, le code d'échange de l'application cible et des informations d'identité d'utilisateur du premier terminal ;
envoyer (305), par le premier terminal, la demande d'autorisation d'application au serveur d'applications, dans lequel la demande d'autorisation d'application est utilisée pour demander au serveur d'applications de vérifier (307) le code d'échange de l'application cible, dans lequel, si le fait que le code d'échange est valide est vérifié par le serveur d'applications, il est déterminé que le premier terminal a payé et le serveur d'applications génère des informations d'autorisation de l'application cible en fonction de l'identifiant de l'application cible et des informations d'identité d'utilisateur du premier terminal, dans lequel les informations d'autorisation comprennent les informations d'identité d'utilisateur du premier terminal ; et
recevoir (308), par le premier terminal, les informations d'autorisation, qui sont envoyées par le serveur d'applications, de l'application cible, dans lequel les informations d'autorisation sont utilisées pour autoriser le premier terminal à utiliser l'application cible.

2. Procédé selon la revendication 1, dans lequel :
avant la génération, par le premier terminal, d'une demande d'autorisation d'application, le procédé comprend en outre :
l'installation, par le premier terminal, de l'application cible à l'aide du progiciel d'installation de l'application cible ; et
après la réception, par le premier terminal, des informations d'autorisation, qui sont envoyées par le serveur d'applications, de l'application cible, le procédé comprend en outre :
la mise à jour (309), par le premier terminal, d'informations de configuration de permission de l'application cible à l'aide des informations d'autorisation de l'application cible, dans lequel les informations de configuration de permission sont une permission pour le premier terminal d'utiliser l'application cible.

3. Procédé selon la revendication 2, dans lequel, après la réception, par le premier terminal, des informations d'autorisation, qui sont envoyées par le serveur d'applications, de l'application cible, le procédé comprend en outre :
l'installation, par le premier terminal, de l'application cible à l'aide du progiciel d'installation de l'application cible, et la configuration d'informations de configuration de permission de l'application cible à l'aide des informations d'autorisation de l'application cible, dans lequel les informations de configuration de permission sont une permission pour le premier terminal d'utiliser l'application cible.

4. Procédé selon l'une quelconque des revendications 1 à 3, dans lequel la demande d'autorisation d'application comprend en outre :
des informations d'indication indiquant que le progiciel d'installation n'a pas besoin d'être téléchargé.

5. Système destiné à l'autorisation de progiciel d'installation, le système comprenant un premier terminal, un second terminal et un serveur d'applications, dans lequel le premier terminal comprend :
une unité de réception de données (601), configurée pour réaliser une étape d'acquisition, en provenance du second terminal à l'aide d'un réseau WiFi, d'un progiciel d'installation d'une application cible, d'un identifiant de l'application cible et d'un code d'échange de l'application cible, dans lequel le premier terminal est configuré pour vérifier l'intégrité du progiciel d'installation ;
une unité de génération de données (602), configurée pour réaliser une étape de génération d'une demande d'autorisation d'application selon l'identifiant de l'application cible, dans lequel la demande d'autorisation d'application comprend l'identifiant de l'application cible, le code d'échange de l'application cible et des informations d'identité d'utilisateur du premier terminal ; et
une unité d'envoi de données (603), configurée pour réaliser une étape d'envoi de la demande d'autorisation d'application au serveur d'applications, dans lequel la demande d'autorisation d'application est utilisée pour demander au serveur d'applications de vérifier le code d'échange de l'application cible ;
dans lequel l'unité de réception de données (601) est en outre configurée pour réaliser une étape de réception, en provenance du serveur d'applications, d'informations d'autorisation de l'application cible,
dans lequel le second terminal est configuré pour :
acheter l'application cible auprès du serveur d'applications à l'aide d'informations de compte du second terminal ;
acheter le code d'échange de l'application cible ;
télécharger le progiciel d'installation de l'application cible depuis le serveur d'applications ;
installer localement l'application cible à l'aide du progiciel d'installation ;
envoyer le progiciel d'installation de l'application cible et l'identifiant de l'application cible au premier terminal à l'aide du réseau WiFi ; et
envoyer le code d'échange de l'application cible au premier terminal à l'aide du réseau WiFi ; et
dans lequel le serveur d'applications est configuré pour :
vérifier si le code d'échange est valide, dans lequel, si le fait que le code d'échange est valide est vérifié par le serveur d'applications, il est déterminé que le premier terminal a payé et le serveur d'applications est en outre configuré pour générer les informations d'autorisation de l'application cible selon l'identifiant de l'application cible et les informations d'identité d'utilisateur du premier terminal, dans lequel les informations d'autorisation comprennent les informations d'identité d'utilisateur du premier terminal, et les informations d'autorisation sont utilisées pour autoriser le premier terminal à utiliser l'application cible.

6. Système selon la revendication 5, dans lequel le premier terminal comprend en outre :
une unité d'installation (606), configurée pour installer l'application cible à l'aide du progiciel d'installation de l'application cible ; et
une unité de mise à jour de permission (604), configurée pour mettre à jour des informations de configuration de permission de l'application cible à l'aide des informations d'autorisation de l'application cible, dans lequel les informations de configuration de permission sont une permission pour le premier terminal d'utiliser l'application cible.

7. Système selon la revendication 6, dans lequel l'unité de mise à jour de permission (604) est en outre configurée pour installer l'application cible à l'aide du progiciel d'installation de l'application cible, et configurer les informations de configuration de permission de l'application cible à l'aide des informations d'autorisation de l'application cible, dans lequel les informations de configuration de permission sont une permission pour le premier terminal d'utiliser l'application cible.

8. Système selon l'une quelconque des revendications 5 à 7, dans lequel la demande d'autorisation d'application comprend en outre :
des informations d'indication indiquant que le progiciel d'installation n'a pas besoin d'être téléchargé.
